# EUROPÄISCHE PATENTANMELDUNG

(11) **EP 0 640 799 A1**
(43) Veröffentlichungstag der Anmeldung: **01.03.1995**
(21) Anmeldenummer: 94113060.1
(22) Anmeldetag: 22.08.1994
(51) Int. Cl.: F24D 19/10, H02J 13/00

(54) **Regler für eine Heizungsanlage**

(30) Priorität: 23.08.1993 DE 9312599 U
(71) Anmelder: G. Kromschröder Aktiengesellschaft, D-49018 Osnabrück (DE)
(72) Erfinder: Köller, Hermann, D-32683 Barntrup (DE)
(74) Vertreter: Harlacher, Mechthild

(57) **Zusammenfassung**

Ein solcher Heizungsregler ist mit einem Bedienungsgerät (4) und einer Anzeigeeinheit (5a) versehen. Über einen Datenbus (2) kommuniziert der Heizungsregler mit anderen Geräten (1, 3, 3n) der Heizungsanlage.

Bei diesem Regler sollen die visuelle Darstellung der Soll- und Istwerte der Heizungsanlage verbessert und insbesondere bei Einstellvorgängen und Abfragen dem Benutzer klar verständliche Informationen angezeigt werden.

Zu diesem Zweck ist als Anzeigeeinheit (5a) ein handelsübliches Fernsehgerät (5) verwendet. Das Fernsehgerät (5) ist über seinen Antenneneingang oder eine genormte Scart-Buchse mittels Kabel direkt an das Bedienungsgerät (4) zur Übertragung des Bildinhaltes angeschlossen.

## Beschreibung

Die Erfindung betrifft einen Regler für eine Heizungsanlage, der mit einem Bedienungsgerät und einer Anzeigeeinheit versehen ist, und der über einen Datenbus mit anderen Geräten der Heizungsanlage und/oder der Haustechnik kommuniziert.

Ein solcher im Prinzip bekannter Heizungsregler eignet sich besonders für komplexe Regelsysteme mit mehreren Heizkreisen innerhalb eines Gebäudes, oder mit separaten Zeit- und Temperaturprofilen für jeden beheizten Raum. Um die dabei zahlreichen Eingabe- und Abfragefunktionen, vor allem bei der Ersteinstellung, zu ermöglichen, ist für den Benutzer eine komfortable Bedienung wünschenswert. Demgegenüber sind die meisten Heizungsregler für Wohngebäude nur mit einer Flüssigkristallanzeige ausgerüstet, die lediglich Symbole und Ziffern darstellt. Deshalb wird bei großen Heizungsanlagen oftmals ein Personalcomputer mit Bildschirm für die Anzeige benutzt. Es sind aber auch Anzeigegeräte mit mehrzeiliger 5x7 Punktmatrix bekannt. Die erstgenannten Heizungsregler sind zumeist sehr kompliziert in der Handhabung, während die letztgenannten Regelsysteme sehr aufwendig und teuer sind und daher für die Anwendung im allgemeinen Wohnungsbau ausscheiden.

Der Erfindung liegt die Aufgabe zugrunde, bei einem Regler der eingangs genannten Art die visuelle Darstellung der Soll- und Istwerte einer Heizungsanlage zu verbessern, und insbesondere bei Einstellvorgängen und Abfragen dem Benutzer klar verständliche Informationen anzuzeigen.

Diese Aufgabe wird erfindungsgemäß dadurch gelöst, daß als Anzeigeeinheit ein handelsübliches Fernsehgerät verwendet ist, welches über seinen Antenneneingang oder seine genormte Scart-Buchse mittels Kabel direkt an das Bedienungsgerät zur Übertragung des Bildinhaltes angeschlossen ist.

Die Erfindung ist insofern vorteilhaft, als mit dem Bildschirm eines in fast allen Haushalten vorhandenen Fernsehgerätes eine komfortable und großformatige Anzeigeeinheit zur Verfügung steht. Alle Vorgänge und Daten bei der Einstellung des Reglers können so hervorragend visualisiert und optimal dargestellt werden. Zugleich läßt sich auch für den Nichtfachmann eine verständliche Benutzerführung bei der Parametrierung und Bedienung komplexer digitaler Heizungsregler realisieren. Über das unabhängig vom eigentlichen Reglerteil handhabbare, nur über den Datenbus gesteuerte Bedienungsgerät und durch Nutzung der grafischen Möglichkeiten des Bildschirmes ergibt sich somit eine für alle Benutzer optimale Bedienungs- und Informationsoberfläche.

Anhand der aus einer Figur bestehenden Zeichnung ist die Erfindung nachstehend naher erläutert.

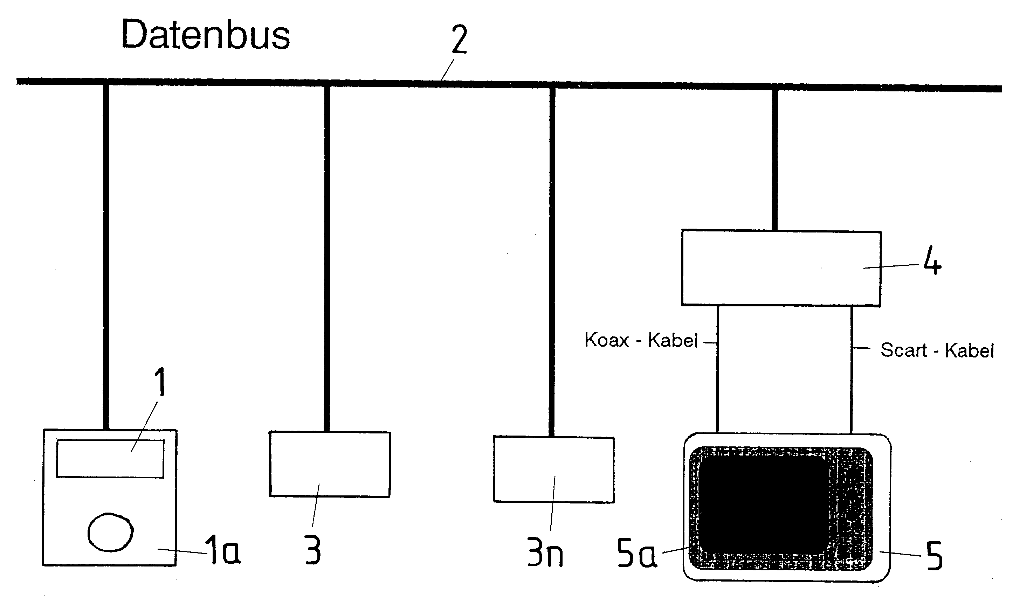

In der Figur ist ein Anlageschema gezeigt mit einem Kesselregler 1, der einem Heizkessel 1a auf bekannte Art zugeordnet ist. Der Kesselregler seinerseits ist über eine Datenleitung mit einem Datenbus 2 verbunden, an dem gleichermaßen zwei nur beispielhaft gezeigte Raumregler 3, 3n angeschlossen sind. Vom Heizkessel bzw. den) Kesselregler 1 räumlich unabhängig ist vorzugsweise in der Wohnung ein Bedienungsgerät 4 handhabbar. Dieses ist ebenfalls an den Datenbus 2 angeschlossen und verfügt auf nicht näher dargestellte Weise über mehrere Eingabe- und Funktionstasten zur Fernbedienung des Regelsystems.

Wahlweise läßt sich an das Bedienungsgerät 4 ein in der Wohnung vorhandenes handelsübliches Fernsehgerät 5 anschließen. Entweder wird hierbei das Bedienungsgerät über ein Koaxialkabel mit dem Antenneneingang des Fernsehgerätes verbunden, oder es wird über ein Scart-Kabel eine feste Verbindung zwischen Bedienungsgerät und Scart-Buchse des Fernsehgerätes hergestellt. Der Bildschirm 5a des Fernsehgerätes läßt sich danach als komfortable Anzeigeeinheit nutzen, auf der über das Bedienungsgerät veranlaßte Einstellvorgänge und Abfragen hervorragend visualisiert werden können. Durch die Einbeziehung des Fernsehgerätes in den über Datenbus gesteuerten Regler lassen sich somit alle grafischen Möglichkeiten des Bildschirmes anwenden. Vorzugsweise bei der Ersteinstellung kann so eine verständliche Bedienungs- und Informationsoberfläche zur Benutzerführung angeboten werden.

## Patentansprüche

1. Regler für eine Heizungsanlage, der mit einem Bedienungsgerät (4) und einer Anzeigeeinheit (5a) versehen ist, und der über einen Datenbus (2) mit anderen Geräten (1, 3, 3n) der Heizungsanlage und/oder der Haustechnik kommuniziert, dadurch gekennzeichnet, daß als Anzeigeeinheit (5a) ein handelsübliches Fernsehgerät (5) verwendet ist, welches über seinen Antenneneingang oder seine genormte Scart-Buchse mittels Kabel direkt an das Bedienungsgerät (4) zur Übertragung des Bildinhaltes angeschlossen ist.
